(19) Europäisches Patentamt / European Patent Office / Office européen des brevets

(11) **EP 3 882 656 A1**

(12) **EUROPEAN PATENT APPLICATION**

(43) Date of publication:
**22.09.2021 Bulletin 2021/38**

(21) Application number: **21150327.1**

(22) Date of filing: **05.01.2021**

(51) Int Cl.:
**G01S 7/481** (2006.01)      **G01S 7/4865** (2020.01)
**G01S 7/487** (2006.01)      **G01S 17/894** (2020.01)
**G01S 13/931** (2020.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2020  JP 2020048966**

(71) Applicant: **Ricoh Company, Ltd.**
**Tokyo 143-8555 (JP)**

(72) Inventor: **YAMADA, Yuu**
**Tokyo, 143-8555 (JP)**

(74) Representative: **White, Duncan Rohan**
**Marks & Clerk LLP**
**Fletcher House**
**Heatley Road**
**The Oxford Science Park**
**Oxford OX4 4GE (GB)**

(54) **IMAGE CAPTURE DEVICE, RANGE FINDING DEVICE, AND METHOD**

(57)      An image capture device (4) includes an image capture control unit (20) configured to control a phase image capture unit (2), the phase image capture unit (2) configured to receive reflection light obtained by irradiating an object with light emitted from a light source at different timings and capture phase images of a plurality of types of different phases, to capture a plurality of phase images of the same phase in one-time image capturing operation; and an image addition unit (23) configured to add the plurality of phase images of the same phase captured in the one-time image capturing operation to generate and output an added phase image for each one-time image capturing operation. The image capture control unit (20) controls the phase image capture unit (2) to perform the image capturing operation for each of the plurality of types of different phases.

## FIG. 2

**Description**

BACKGROUND

Technical Field

This disclosure relates to an image capture device, a range finding device, and a method.

Background Art

Time-of-flight (TOF) camera that measures a range or distance to an object using TOF method is known. The TOF camera irradiates light to the object and then calculates the range or distance to the object based a time difference between a time of emitting light and a time of receiving the light reflected from the object.

More specifically, the TOF camera irradiates infrared light having an intensity modulated by a pre-set irradiation pattern to the object, and then an infrared image sensor receives the light reflected from the object. Then, a processor calculates the range or distance to the object based a time difference between a time of emitting the light having a given irradiation pattern and a time of receiving the light reflected from the object for each pixel. Then, the calculated range value is collected in a form of bitmap for each pixel, and stored as "range image".

One technique is disclosed, in which an amount of charges obtained at two phases are set to an equal level by controlling the number of times repeating the light exposure operation at the two phases to achieve a higher ranging accuracy with a higher signal to noise (S/N) ratio as disclosed in WO-A1-2014/207992.

However, as to the conventional TOF camera, if the light exposure time for one measurement is too short, the amount of received light becomes insufficient, while if the light exposure time is too long, the number of pixels in which charge is saturated increases. Therefore, the conventional TOF camera may capture the phase image with a narrower dynamic range.

The above described one technique can variably control the number of times repeating the light exposure operation to accumulate signals closer to the maximum accumulation capacity of the sensor, but may capture the phase image with a narrower dynamic range because the dynamic range is limited to the maximum accumulation capacity of the sensor.

If the dynamic range of the phase image becomes narrower, the range-finding accuracy deteriorates when the amount of received light changes or varies depending on a reflectance level of an object or a range between an object and an image capture device.

SUMMARY

As one aspect of the present disclosure, an image capture device is devised. The image capture device includes an image capture control unit configured to control a phase image capture unit, the phase image capture unit configured to receive reflection light obtained by irradiating an object with light emitted from a light source at different timings and capture phase images of a plurality of types of different phases, to capture a plurality of phase images of the same phase in one-time image capturing operation; and an image addition unit configured to add the plurality of phase images of the same phase captured in the one-time image capturing operation to generate and output an added phase image for each one-time image capturing operation. The image capture control unit controls the phase image capture unit to perform the image capturing operation for each of the plurality of types of different phases.

As another aspect of the present disclosure, a method of controlling a range finding operation is devised. The method includes controlling a phase image capture unit, the phase image capture unit configured to receive reflection light obtained by irradiating an object with light emitted from a light source at different timings and capture phase images of a plurality of types of different phases, to capture a plurality of phase images of the same phase in one-time image capturing operation; adding the plurality of phase images of the same phase captured in the one-time image capturing operation to generate and output an added phase image for each one-time image capturing operation; and controlling the phase image capture unit to perform the image capturing operation for each of the plurality of types of different phases.

As to the above described aspects of this disclosure, the image capture device, and the method capable of obtaining a phase image having a wider dynamic range can be provided.

BRIEF DESCRIPTION OF THE DRAWINGS

A more complete appreciation of the description and many of the attendant advantages and features thereof can be readily acquired and understood from the following detailed description with reference to the accompanying drawings, wherein:

FIG. 1 is an example of a hardware block diagram of a ranging-imaging apparatus according to a first embodiment;

FIG. 2 is an example of functional block diagram of a ranging-imaging apparatus according to a first embodiment;

FIG. 3 is a timing chart for describing a method of finding a range;

FIG. 4 is an example of diagram illustrating a phase image obtained by performing a plurality of image capturing operations using a general time-of-flight (TOF) camera used as a comparative example;

FIG. 5 is an example of diagram illustrating an image capturing operation of an image sensor of a ranging-imaging apparatus according to a first embodiment;

FIG. 6 is an example of timing chart describing an image capturing operation of an image sensor of a ranging-imaging apparatus according to a first embodiment;

FIG. 7 is an example of diagram illustrating a correction operation of motion amount of phase image; and

FIG. 8 is an example of diagram illustrating an enlarging a range of ranging operation in a ranging-imaging apparatus according to a second embodiment.

The accompanying drawings are intended to depict embodiments of the this disclosure and should not be interpreted to limit the scope thereof. The accompanying drawings are not to be considered as drawn to scale unless explicitly noted.

DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

Further, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of a ranging-imaging apparatus 100 according to an embodiment of the this disclosure with reference to the accompanying drawings.

(First Embodiment)

(Hardware Configuration)

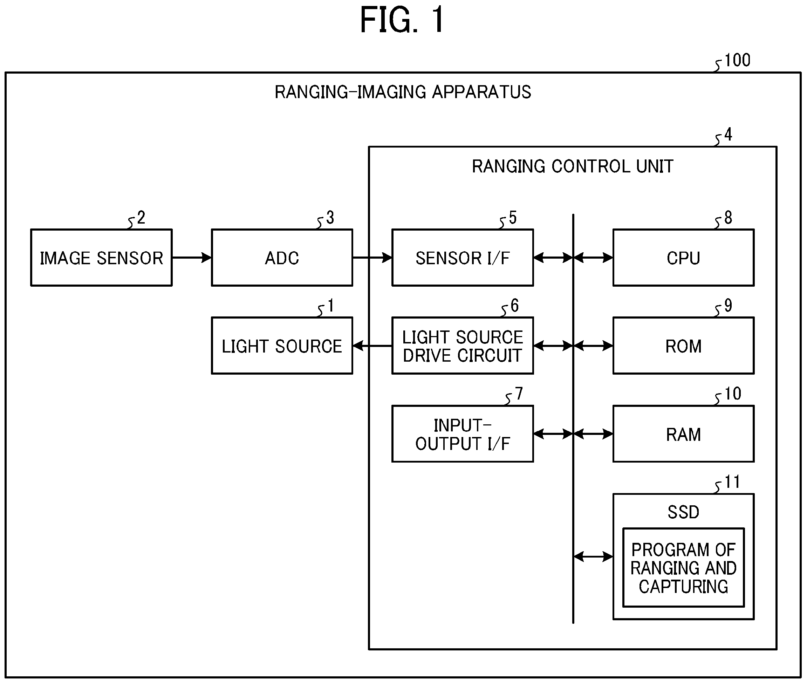

FIG. 1 is an example of a hardware block diagram of a ranging-imaging apparatus 100 (or range finding device) according to a first embodiment. As illustrated in FIG. 1, the ranging-imaging apparatus 100 includes, for example, a light source 1, an image sensor 2 (an example of a phase image capturing unit), an analog-to-digital converter (ADC) 3, and a ranging control unit 4.

The light source 1 can employ, for example, vertical cavity surface emitting laser (VCSEL). The light source 1 projects a laser beam emitted from the VCSEL to a wider range through, for example, a wide-angle lens or fish-eye lens. The light source 1 is not limited to a combination of laser beam and wide-angle lens. For example, the light source 1 can employ a combination of light emitting diode (LED) and a projection optical system as long as the combination can project light to an object.

The image sensor 2 employs, for example, a time of flight (TOF) sensor. The image sensor 2 receives reflection light of the laser beam irradiated onto the object from the light source 1. To be described in detail later, the image sensor 2 divides electric signals corresponding to an intensity of the received reflection light into a plurality of phase signals, and then acquires the phase signal for each pixel.

The ADC 3 converts the phase signal obtained for each pixel from analog signal to digital data, and then supplies the digital data to the ranging control unit 4.

The ranging control unit 4 includes, for example, a sensor interface (I/F) 5, a light source drive circuit 6, an input-output interface (I/F) 7, a central processing unit (CPU) 8, a read only memory (ROM) 9, a random access memory (RAM) 10, and a solid state drive (SSD) 11 as hardware resources. The ranging control unit 4 can be used as an image capture device. These hardware resources are electrically connected to each other via a system bus.

The sensor I/F 5 is an interface for acquiring a phase signal from the image sensor 2. The input-output I/F 7 is an interface for connecting to an external device, such as a main controller or a personal computer.

The light source drive circuit 6 supplies a drive signal, such as a drive voltage, to the light source 1 based on a control signal supplied from the CPU 8 to emit light from the light source 1. The drive signal supplied to the light source 1 may be a voltage waveform having rectangular wave, sine wave, or pre-set waveform shape. The light source drive circuit 6 modulates and controls a frequency of drive signal by changing a frequency of voltage waveform. Further, among a part of a plurality of light emitting units, the light source drive circuit 6 can control the emission of a part of the light emitting units simultaneously, or can change the light emitting units used for emitting light.

The CPU 8 reads programs or data from a storage device, such as the ROM 9 or the SSD 11, onto the RAM 10, and executes the programs to control the ranging control unit 4 entirely. Further, a part or all of the functions of the CPU 8 may be implemented by an electronic circuit, such as application specific integrated circuit (ASIC) or field-programmable gate array (FPGA).

The ROM 9 is a non-volatile semiconductor memory (storage device) capable of retaining programs or data even when the power supply is turned off. The ROM 9 stores programs or data such as Basic Input/Output System (BIOS) and Operating System (OS) settings to be executed when the CPU 8 is activated.

The RAM 10 is a volatile semiconductor memory (storage device) used for temporarily retaining programs or data.

The SSD 11 is a nonvolatile memory storing programs or various data for executing the processing by the ranging control unit 4. For example, the SSD 11 stores one or more programs used for performing ranging and capturing operation. To be described in detail later, the CPU 8 executes the program for performing ranging and capturing operation to control the image sensor 2 to receive an electric signal corresponding to the intensity of the received reflection light, to divide the electric signal into a plurality of phase signals, and to acquire the phase signal for each pixel. Further, instead of the SSD 11, another storage device such as a hard disk drive (HDD) may be used.

(Function of Ranging Control Unit)

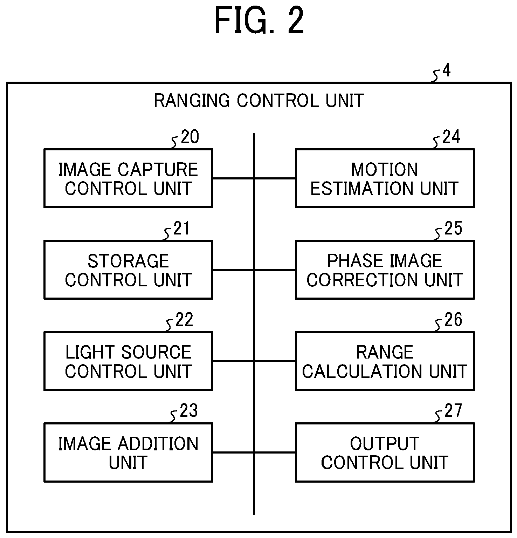

Then, the CPU 8 of the ranging control unit 4 executes the program for performing ranging and capturing operation stored in the SSD 11 to implement respective functions, such as image capture control unit 20, storage control unit 21, light source control unit 22, image addition unit 23, motion estimation unit 24, phase image correction unit 25, range calculation unit 26, and output control unit 27 as illustrated in FIG. 2.

To be described in detail later, the image capture control unit 20 captures phase images for a plurality of phases, and controls the image sensor 2 to store charges corresponding to each phase image in a charge accumulation unit provided for each phase image. The storage control unit 21 stores the phase signals (phase images) of the respective phases received from the image sensor 2 in a storage unit, such as the RAM 10, and reads out the phase signals from the storage unit, such as the RAM 10.

The light source control unit 22 controls a light emission of the light source 1 via the light source drive circuit 6.

The image addition unit 23 digitally adds or sums values of a plurality of phase images stored in the storage unit, such as the RAM 10.

The motion estimation unit 24 (an example of motion amount correction unit) calculates a motion amount of each pixel between the phase images added digitally.

The phase image correction unit 25 generates a phase image by correcting the motion amount based on the motion amount estimated for each pixel.

The range calculation unit 26 calculates a range or distance to an object based on the plurality of phase images having the corrected motion amount.

The output control unit 27 outputs range information indicating the range to the object calculated by the range calculation unit 26 to an external apparatus or device via the input-output I/F 7.

In a case of capturing images of the same object continuously, a position (coordinates) of the object in the captured images may become different among the images of the same object captured continuously due to a time-line change of the relative positional relationship between an image capture device and the object caused by "blur" at the image capture device, and vibration of the object. Since the difference of the relative positional relationship of the object reflects a change of the relative positional relationship of the image capture device and the object, the difference can be recognized as a motion of the object among the continuously captured images. The change of the position of the object between the continuously captured images may be recognized as the motion amount. The motion estimation unit 24 calculates the amount of motion between the continuously captured images of the object for each pixel.

Further, the image capture control unit 20 to the output control unit 27 illustrated in FIG. 2 can be respectively implemented by executing one or more software programs, such as one or more programs for performing ranging and capturing operation. Further, a part or all of the image capture control unit 20 to the output control unit 27 may be implemented using a hardware resource such as integrated circuit (IC).

Further, the program for performing ranging and capturing operation may be provided by recording the program on a recording medium as file information readable by a computer, such as compact disk read only memory (CD-ROM) and flexible disk (FD) in an installable form or an executable form. Further, the program for performing ranging and capturing operation may be recorded on a recording medium readable by a computer, such as compact disk readable (CD-R), digital versatile disk (DVD), Blu-ray (registered trademark) disc, or semiconductor memory. Further, the program for performing ranging and capturing operation may be provided in a form of being installed via a network such as the Internet. Further, the program for performing ranging and capturing operation may be provided by incorporating the program in ROM or the like in the apparatus in advance.

(Phase Signal Acquisition Operation)

The image sensor 2 includes, for example, two charge accumulation units, such as a first charge accumulation unit and a second charge accumulation unit, for one light receiving element, and the two charge accumulation units for accumulating the charge can be switched at a high speed. With this configuration, two phase signals that are exactly opposite to each other can be detected simultaneously for one rectangular wave. For example, a phase signal of 0 degree (0-degree phase signal) and a phase signal of 180 degrees (180-degree phase signal) can be detected simultaneously. Further, a phase signal of 90 degrees (90-degree phase signal) and a phase signal of 270 degrees (270-degree phase signal) can be detected simultaneously. This means that the range can be measured by performing two times of light-emitting and light-receiving processes.

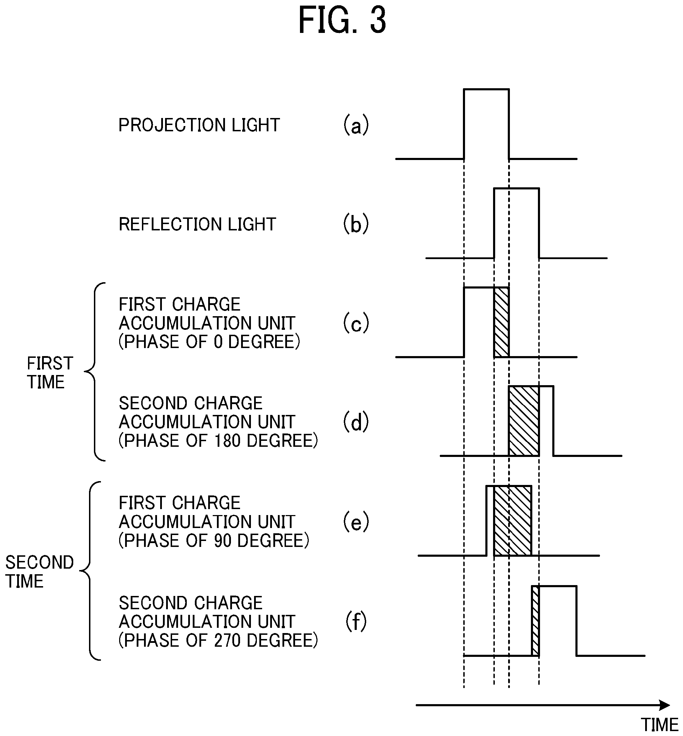

FIG. 3 is an schematic timing chart for describing a method of finding a range.

FIG. 3(a) indicates a timing of the light projection. FIG. 3(b) indicates a timing of the reflection light obtained by performing the light projection.

FIG. 3(c) indicates a timing at which a phase signal corresponding to a phase of 0 degree is stored in the first charge accumulation unit among the two charge accumulation units provided for the image sensor 2. FIG. 3(d) indicates a timing at which a phase signal corresponding to a phase of 180 degrees is stored in the second charge accumulation unit among the two charge accumulation units provided for the image sensor 2.

FIG. 3(e) indicates a timing at which a phase signal corresponding to a phase of 90 degree is stored in the first charge accumulation unit among the two charge accumulation units provided for the image sensor 2. FIG. 3(f) indicates a timing at which a phase signal corresponding to a phase of 270 degrees is stored in the second charge accumulation unit among the two charge accumulation units provided for the image sensor 2.

During a period indicated by oblique lines in FIGs. 3(c) to 3(f), the charges of phase signals of the respective phases are stored in the first charge accumulation unit or the second charge accumulation unit.

Specifically, as illustrated in FIG. 3(c), as to the charge of the phase signal having the phase of 0 degree, the charge between a pulse edge at the end of the light projection and a pulse edge at the start of receiving the reflection light is accumulated in the first charge accumulation unit.

As illustrated in FIG. 3(d), as to the charge of the phase signal having the phase of 180 degrees, the charge between the accumulation completion of charge of the phase signal having the phase of 0 degree and a pulse edge at the end of receiving the reflection light is accumulated in the second charge accumulation unit.

Similarly, as illustrated in FIG. 3(e), as to the charge of the phase signal having the phase of 90 degrees, the charge between a pulse edge at the start of receiving the reflection light and a pulse edge of the accumulation completion of charge of a pulse used for performing the charge accumulation control is accumulated in the first charge accumulation unit.

As illustrated in FIG. 3(f), as to the charge of the phase signal having the phase of 270 degrees, the charge between the accumulation completion of charge of the phase signal having the phase of 90 degrees and a pulse edge at the end of receiving the reflection light is accumulated in the second charge accumulation unit.

Actually, in order to increase the amount of accumulated charges, instead of performing the light projection using a rectangular wave for only one time, the light projection is performed repeatedly using a pattern of rectangular wave, and the switching control between the first charge accumulation unit and second charge accumulation unit in accordance with the timing of projecting the light of repeating pattern is also performed repeatedly.

(Calculation of Range Value)

Each of the four phase signals corresponding to 0 degree (A0), 90 degrees (A90), 180 degrees (A180), and 270 degrees (A270) is a phase signal, which is divided into respective four phases of 0 degree, 90 degrees, 180 degrees, and 270 degrees with respect to a pulse period of the projection light (irradiation light). Therefore, a phase difference angle $\varphi$ can be obtained using the following equation.

$$\varphi = \text{Arctan}\{(A90 - A270)/(A0 - A180)\}$$

Further, a delay time "Td" can be calculated from the phase difference angle φ using the following equation.

$$Td = (\varphi/2\pi) \times T$$

(T = 2T0, T0: pulse width of irradiation light)

Further, a range value "d" indicating a range or distance to the object can be obtained from the delay time "Td" using the following equation.

$$d = Td \times c \div 2 \text{ (c: speed of light)}$$

In an example case illustrated in FIG. 3, the phase signal of 0 degree and the phase signal of 180 degrees are acquired at the first-time measurement. If there is an influence of external light, the charge amount of the second charge accumulation unit is subtracted from the charge amount of the first charge accumulation unit acquired at the first-time measurement to generate a phase signal, with which the influence of external light is reduced. In this measurement method, one phase signal is acquired by one-time of light emission (emitting of projection light) and light exposure (receiving of reflection light). Therefore, to acquire the phase signals of the four phases, four times of light emission and light exposure are required, and a time period required to perform the image capture operation becomes two times of a time period of a case where there is no influence of external light.

In the following description, it is assumed that the phase signal obtained by the one-time of light emission (emitting of projection light) and light exposure (receiving of reflection light) is a phase signal calculated from the charge amount of the first charge accumulation unit and the charge amount of the second charge accumulation unit by reducing, in particular, eliminating the influence of external light.

(Image Capture Operation of Comparative Example)

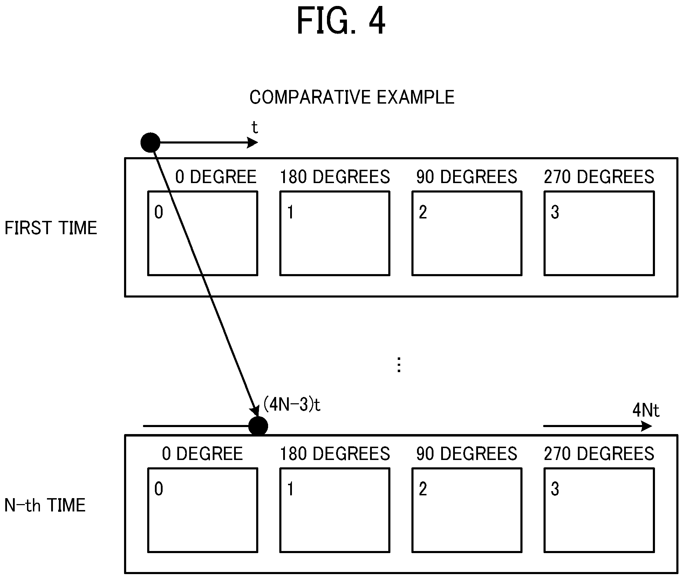

FIG. 4 is an example of diagram illustrating phase images obtained by performing a plurality of image capturing operations using a general ToF camera used as a comparative example. In a case of the general ToF camera, phase images of respective phases of 0 degree, 180 degrees, 90 degrees, and 270 degrees are acquired for each one-time image capturing operation.

Then, phase images having the same phase (e.g., phase images having the phase of 0 degree, phase images having the phase of 90 degrees), which are obtained by each one-time image capturing operation, are added to obtain a phase image having an enlarged dynamic range. Based on the phase image having the enlarged dynamic range, the calculation of phase angle and range conversion processing are performed.

In a case where a plurality of phase images having the same phase are captured in this manner, if the time required for capturing one phase image is "t", a time of "4Nt" is required to capture all phase images of all of the four phases. Then, the acquisition time of N phase images for a specific phase becomes "(4N-3)t". This means that when N phase images having the phase of 0 degree are added to enlarge the dynamic range as above described, the motion amount for the time period of "(4N-3)t" is superimposed on the phase images as noise.

(Image Capturing Operation)

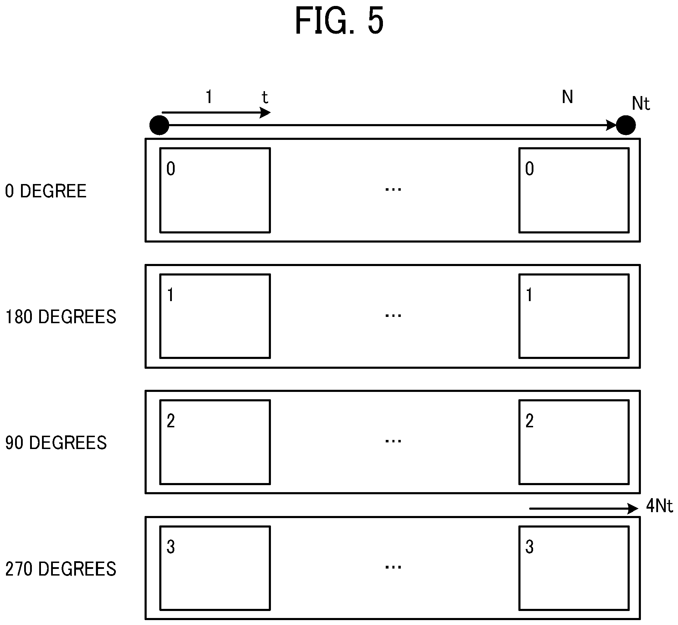

FIG. 5 is an example of diagram illustrating an image capturing operation performed by the image sensor 2 of the ranging-imaging apparatus 100 according to the first embodiment. As illustrated in FIG. 5, as to the first embodiment, the image capture control unit 20 (see FIG. 2) controls the image sensor 2 to capture a plurality of phase images of the same phase in one-time image capturing operation. The image capture control unit 20 performs such image capturing operation for each phase.

In an example case of FIG. 5, N phase images having the phase of 0 degree (N is a natural number of two or more) are captured at the first-time image capturing operation, N phase images having the phase of 180 degrees are captured at the second-time image capturing operation, N phase images having the phase of 90 degrees are captured at the third-time image capturing operation, and N phase images having the phase of 270 degrees are captured at the fourth-time image capturing operation. The order of capturing the phase images illustrated in FIG. 5 is just one example. The order of capturing the phase images may be arbitrary.

In this case, as illustrated in FIG. 5, the time required to acquire N phase images of each phase becomes "Nt", and the total time required to acquire the phase images of four phases of 0 degree, 180 degrees, 90 degrees, and 270 degrees becomes "4Nt".

As to general or conventional image capturing operation, the time required to capture all of phase images of four phases is also "4Nt" that is the same as the time of "4Nt" required for acquiring the phase images of four phases in the first embodiment. However, as to the first embodiment, the time required to acquire N phase images of one phase becomes "Nt", which is shorter than the general or conventional image capturing operation. Since the time required to acquire the N phase images of one phase using the general or conventional image capturing operation becomes "(4N-3)t" as described above as the comparative example, a ratio of the time required for the image capturing operation of the first embodiment with respect to the time required for the image capturing operation of the general or conventional image capturing operation can be calculated using Math (1).

(Math 1)

$$\frac{Nt}{(4N-3)t} = \frac{N}{4N-3} \qquad \cdots (1)$$

When the number of phase images to be acquired is one (N = 1), the ratio calculated by Math (1) becomes "1," in which there is no difference between the general method and the method of the first embodiment.

However, if the number N of phase images to be acquired for each phase becomes sufficiently greater, that is, if N becomes infinite "∞," the time required for image capturing operation of the first embodiment becomes one fourth (1/4) of the general method as indicated by the following Math (2). That is, if a plurality of phase images having the same phase are captured in one-time image capturing operation to enlarge the dynamic range, the time required for one-time image capturing operation can be reduced to about one-fourth (1/4) compared to a case of the above-described comparative example where the same number of phase image is captured for each one of different phases in one-time image capturing operation (see FIG. 4).

(Math 2)

$$\lim_{N \to \infty} \frac{N}{4N-3} = \frac{1}{4} \qquad \cdots (2)$$

Further, the image addition unit 23 (see FIG. 2) adds N phase images of the same phase obtained by performing the one-time image capturing operation. With this configuration, the dynamic range of phase image of each phase can be enlarged.

Further, as described above, since the time required for the image capturing operation for each phase of the first embodiment can be reduced to about one fourth (1/4) compared to the comparative example, the amount of motion caused by the influence of blur of the captured images, which are the target images to be added, can be also reduced to about one fourth (1/4).

Therefore, although the time required for the image capturing operation of capturing all of phases images of all of phases (four phases) of the first embodiment becomes equal to the time required for the image capturing operation of the comparative example, the time required for the image capturing operation of the captured images to be added becomes shorter, the influence of the blur of the captured images becomes smaller, the position accuracy is improved, and the phase image having the enlarged dynamic range can be generated.

In an example case of FIG. 5, the phase images of four phases of 0 degree, 180 degrees, 90 degrees, and 270 degrees are captured, but the range can be calculated by capturing the phase images of two phases.

(Imaging Capturing Operation)

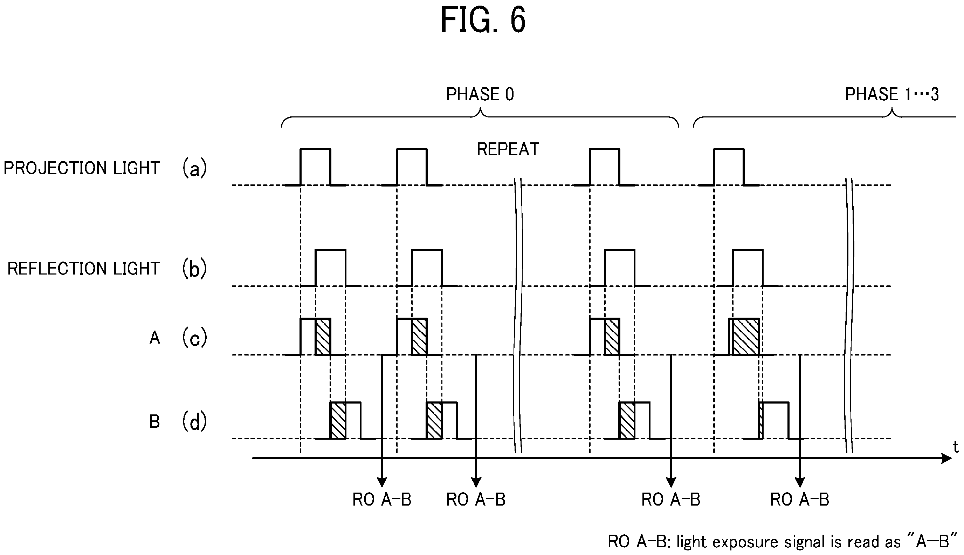

FIG. 6 is an example of timing chart describing an image capturing operation performed by the image sensor 2 of the ranging-imaging apparatus 100 according to the first embodiment.

FIG. 6(a) indicates a timing of projecting light onto an object. FIG. 6(b) indicates a timing of receiving the reflection light from the object.

Further, FIG. 6(c) indicates a generation timing of a phase signal corresponding to a phase of, for example, 0 degree. FIG. 6(d) indicates a generation timing of a phase signal corresponding to a phase of, for example, 180 degrees.

When the one-time light projection and light exposure illustrated in FIGs. 6(a) and 6(b) is performed, as illustrated in FIGs. 6(c) and 6(d), the image capture control unit 20 controls the image sensor 2 to receive light at a timing at which the phase is shifted by 180 degrees, for example, a phase (A) at 0 degree (phase 0) and a phase (B) at 180 degrees. With this configuration, the phase signal of phase (A) of 0 degree is accumulated in the first charge accumulation unit of the image sensor 2, and the phase signal of phase (B) of 180 degrees is accumulated in the second charge accumulation unit of the image sensor 2.

The image capture control unit 20 reads out a phase signal by calculating phase 0 = "A-B every time the light exposure (receiving of reflection light) is completed to obtain a phase signal having removed the influence of external light. Further, in a case where there is no external light, phase images of two phases shifted for 180 degrees can be obtained in one-time image capturing operation. In this case, the calculation of "A-B" is not required.

The image capture control unit 20 repeatedly performs the above described image capturing control and read-out control until completing the capturing of N phase images of the same phase. When the image capturing operation of the N phase mages of the same phase is completed, the image capturing operation of the N phase images of another phase is performed.

(Correction Operation of Movement Amount of Phase Image)

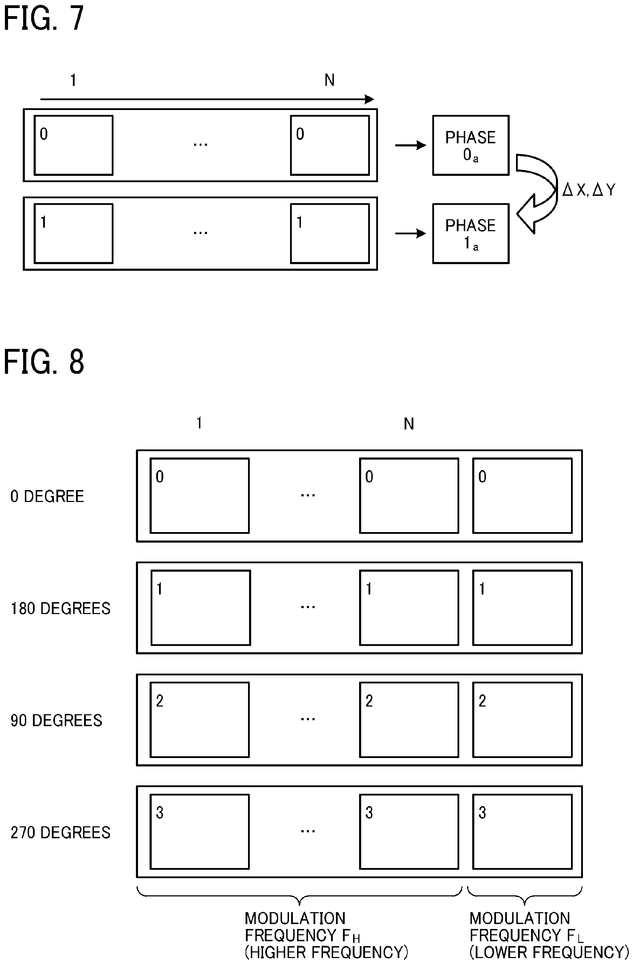

FIG. 7 is an example of diagram illustrating a correction operation of motion amount of phase image. FIG. 7 indicates a state in which, for example, N phase images having the phase of 0 degree are captured, and N phase images having the phase of 180 degrees are captured. As to an example case of FIG. 7, the phase image of phase 0a indicates a phase image (an example of added phase image) generated by adding N phase images captured at the phase of 0 degree for each pixel at each coordinate, and the phase image of phase 1a indicates a phase image (an example of added phase image) generated by adding N phase images captured at the phase of 180 degrees for each pixel at each coordinate.

In order to simplify the description, the correction operation of the amount of motion between the phase images of the two phases of 0 degree and 180 degrees is described, but the correction operation of the amount of motion between the phase images of other phases is also performed same as the two phases of 0 degree and 180 degrees.

As described above, by adding N phase images of the same phase, the dynamic range of the phase image of the concerned same phase can be enlarged. Further, since the time required for capturing N phase images to be added for each phase can be set shorter, the phase image, which is less affected by blurring and has improved positional accuracy, can be obtained. Therefore, the following motion amount correction processing can be also performed with higher accuracy using the phase image having the enlarged dynamic range.

The motion estimation unit 24 (see FIG. 2) calculates the motion amount of ΔX and ΔY during the time of "Nt" of the phase image of phase 0a and the time of "Nt" of the phase image of phase 1a using a processing for obtaining a general optical flow or a machine learning method disclosed in the following reference.

Reference Title: Tackling 3D ToF Artifacts Through Learning and the FLAT Dataset
Author: Qi Guo (SEAS, Harvard University), Iuri FrosioOrazio, GalloTodd Zickler (SEAS, Harvard University), Jan Kautz
Publication Date: Monday, September 10, 2018

Originally published by ECCV (European Conference on Computer Vision) 2018 URL (Uniform Resource Locator) https://research.nvidia.com/publication/2018-09_Tackling-3D-ToF

Then, the phase image correction unit 25 generates a corrected phase image of phase 1a', which is obtained by correcting the motion amount of the phase image of phase 1a captured during the time "Nt" for each pixel of each coordinates (x, y) by computing the following Math (3).

(Math 3)

$$\text{Phase1a}'(x, y) = \text{Phase1a}(x+\Delta X, y+\Delta Y)$$

As described above, since the motion amount between the phase images of the each phase is corrected based on the phase images having a smaller error due to the short-time image capturing operation and having the enlarged dynamic range, the motion amount can be corrected with higher accuracy.

Further, if the motion amount of ΔX and ΔY have values of decimal points, the phase image correction unit 25 calculates interpolation values based on pixel values of pixels around a pixel to be corrected, as in the bilinear interpolation.

Further, in the above described example case, the motion amount is corrected based on the phase images generated by adding N phase images at the phase 0a and phase 1a, but is not limited thereto. For example, the correction processing may be performed on all of the phase images not yet receiving the addition processing, using the obtained motion amount. An further improvement of correction accuracy will be described later.

The phase image of phase 1a', obtained by correcting the phase images of phase 1a by the phase image correction unit 25, corresponds to the phase image obtained by correcting the motion for the time of "Nt," which is a difference between an image capture time of phase 0a and an image capture time of phase 1a. Therefore, the phase image of phase 1a' is a phase image that is obtained by correcting the phase image of phase 1a captured at the same time when the phase image of phase 0a is captured. Therefore, by obtaining the range image based on the phase image of phase 0a and the phase image of phase la', a high-precision range image having corrected the influence of the motion amount during the time "Nt," which is the difference of image capturing time between each of the phases, is obtained.

The range calculation unit 26 calculates a range to an object based on the phase image of each phase having corrected the motion amount. The output control unit 27 outputs range information indicating the range to the object calculated by the range calculation unit 26 to the external apparatus or device via the input-output I/F 7.

(Improvement of Correction Accuracy)

Hereinafter, a description is given of a case of correcting the motion amount more accurately when performing the image capturing operation of FIG. 5.

As to the added phase image obtained by performing the addition processing on N phase images, the motion estimation unit 24 calculates the amount of motion between the added phase image of the phase of 0 degree and the added phase image of the phase of 180 degrees, the amount of motion between the added phase image of the phase of 180 degrees and the added phase image of the phase of 90 degrees, and the amount of motion between the added phase image of the phase of 90 degrees and the added phase image of the phase of 270 degrees. In this case, a difference of the start time of the image capturing operation between each of the phases becomes the time of "Nt."

Based on the motion amount between each of the added phase images and the time of "Nt," which is the difference of start time of the image capturing operation between each of the phases, the motion estimation unit 24 calculates a motion amount of each of phase images not yet receiving the addition processing from the start time of the image capturing operation.

For example, when the motion amount calculated from the added phase images of the phase of 0 degree and the added phase images of the phase of 180 degrees is ($\Delta$X, $\Delta$Y), the motion amount can be calculated by performing the linear interpolation such as setting the motion amount of n-th phase image of phase of 0 degree (n is a natural number from 1 to N) as ($\Delta$X $\times$ (n-1)/N, $\Delta$Y $\times$ (n-1)/N)).

Further, the calculation of the motion amount is not limited to the linear interpolation method as described above. For example, the motion estimation unit 42 can calculate and store the motion amount by using an arbitrary function with respect to time. The above described linear interpolation can be applied to the low-frequency blur caused by vibration of the ranging-imaging apparatus 100, and a periodic function such as a sine function can be applied to high-frequency vibration.

The phase image correction unit 25 performs the above described motion amount correction processing on all of the phase images based on the motion amount of each one of phase images calculated by the motion estimation unit 24.

In an example case of FIG. 5 described above, when the coordinates of the pixels of the n-th phase image before performing the correction for the phase of 0 degree are (x, y), the coordinates of pixels of the n-th phase image after performing the correction become (x + $\Delta$X $\times$ (n-1)/N, y + $\Delta$Y $\times$ (n-1)/N). Further, as described above, the interpolation method may be performed by an arbitrary function in addition to the linear interpolation.

With this configuration described above, the motion amount can be corrected for each phase image before adding the phase images, and the added phase image created by adding the corrected phase images can satisfy both the higher accuracy and enlarged dynamic range, and thereby the motion amount can be corrected with further higher accuracy. When the range image is created using the added phase image created by adding the corrected phase images, the motion amount is corrected with higher accuracy, with which the range image can be generated more accurately.

As to the each phase image whose motion amount have corrected as described above, the image addition unit 23 performs the addition processing to N phase images of each same phase to enlarge the dynamic range.

The range calculation unit 26 calculates the range or distance to the object based on the phase image of each phase having the dynamic range enlarged by the addition processing and the corrected motion amount. The output control unit 27 outputs the range information indicating the range or distance to the object calculated by the range calculation unit 26 to the external apparatus or device via the input-output I/F 7.

As to the above described first embodiment, the ranging-imaging apparatus 100 performs the image capturing operation of N phase images for the same phase in one-time image capturing operation for each phase. Then, the phase images of the respective phases are generated by adding the N phase images of the respective phases. With this configuration, the dynamic range of phase image of each phase can be enlarged. Therefore, the range or distance to the object can be calculated based on the phase image having the enlarged dynamic range, with which the range-finding accuracy can be improved. The enlargement of dynamic range can be increased as the number of phase images of each phase to be added is increased.

Further, since the above described configuration can be implemented by controlling the image sensor 2 to capture the phase images of the same phase collectively, the above described configuration can be implemented with an inexpensive and simple configuration.

Further, by capturing N phase images of the same phase in one-time image capturing operation, the time required for capturing the phase image of one phase can be shortened, with which the influence of motion, such as blurring while capturing the N phase images to be added, can be reduced. Thus, the positional accuracy of the added phase image can be improved.

Further, the added phase image of each phase can be created by adding the phase images of each of the phases, and the amount of motion of the object can be calculated based on the difference in the image capturing time for each phase. Therefore, the motion amount of the object calculated based on the difference of image capturing time can be corrected, and the range-finding accuracy can be improved.

Further, the motion amount of phase images of each phase not yet receiving the addition processing are corrected based on the motion amount calculated based on the above described added phase image. With this configuration, the correction processing of the motion amount can be performed for the phase images of each phase not yet receiving the addition processing, with which the influence of the motion amount to the phase image, created by adding the phase images having corrected the motion amount, can be further reduced, with which the range-finding accuracy can be further improved.

(Second Embodiment)

Hereinafter, with reference to FIG. 8, a description is given of the ranging-imaging apparatus 100 according to a second embodiment.

As to conventional technologies, aliasing noise of the range image that is calculated based on the phase image obtained by driving the image sensor at higher frequency can be corrected using the range image that is calculated based on the phase image obtained by driving the image sensor at lower frequency to enlarge a range of ranging operation. Further, as to conventional technologies, the range measurement resolution can be increased by using a range image that is created from phase images obtained by driving an image sensor at higher frequency.

However, as in the comparative example described above, in a case when the phase images of the respective phases of 0 degree, 180 degrees, 90 degrees, and 270 degrees are captured in one-time image capturing operation, if the difference between the motion amount of the phase images of the respective phases obtained by driving the image sensor at higher frequency and the motion amount of the phase images of the respective phases obtained by driving the image sensor at lower frequency becomes too great, the range-finding accuracy may deteriorate.

In view of this issue, as to the ranging-imaging apparatus 100 of the second embodiment, as indicated in FIG. 8, the image capture control unit 20 drives the image sensor 2 at higher frequency with a modulation frequency fH (i.e., first frequency) to capture N phase images (i.e., higher-frequency phase images) for each phase as described above. Further, after capturing the higher-frequency phase images, the image capture control unit 20 drives the image sensor 2 at lower frequency with a modulation frequency fL (i.e., second frequency) to capture a phase image (lower-frequency phase image) for each phase as described above. In this image capturing operation, the modulation frequency fH is set higher than the modulation frequency fL (modulation frequency fH > modulation frequency fL).

For example, as illustrated in FIG. 8, after capturing N phase images having the phase of 0 degree at the modulation frequency fH, one phase image having the phase of 0 degree is captured at the modulation frequency fL.

Then, after capturing N phase images having the phase of 180 degrees at the modulation frequency fH, one phase image having the phase of 180 degrees is captured at the modulation frequency fL.

Further, N phase images at the modulation frequency fH and one phase image at the modulation frequency fL are captured in the same manner for the phase of 90 degrees and the phase of 270 degrees similarly.

In an example case of FIG. 8, only one phase image is captured at the modulation frequency fL, but is not limited thereto. For example, as similar to the modulation frequency fH, a plurality of phase images can be captured at the modulation frequency fL to create an added phase image.

However, in order to shorten the time difference of image capturing operation between the respective phases, the number of phase images captured at the modulation frequency fL is preferably set smaller. The number of the phase image captured at the modulation frequency fL is determined to a number that has a precision sufficient to correct the aliasing noise when calculating the range image, in which the number of the phase image captured at the modulation frequency fL becomes at least one.

As indicated in FIG. 8, by capturing the phase images of the same phase collectively, the time interval between the high-frequency phase image and the lower-frequency phase image can be shortened. Therefore, the lower-frequency phase image can be obtained as a low-frequency image having a motion amount closer to a motion amount of the high-frequency phase image.

As similar to the first embodiment, the image addition unit 23 creates an added high-frequency phase image by adding the high-frequency phase images acquired at the modulation frequency fH for each phase, and then the motion estimation unit 24 calculates the amount of motion between the added high-frequency phase images.

Then, the phase image correction unit 25 corrects each added high-frequency phase image based on the calculated motion amount. The calculated motion amount of each phase can be applied to the lower-frequency phase image of each phase captured at the modulation frequency fL. Then, the phase image correction unit 25 corrects the lower-frequency phase image of each phase based on the motion amount calculated from the added high-frequency phase image of each phase.

Then, the range calculation unit 26 creates a low-frequency range image calculated from the corrected lower-frequency phase image, and a high-frequency range image calculated from the corrected added high-frequency phase image, and corrects the aliasing noise of the high-frequency range image using the low-frequency range image.

With this configuration, a range of the measurable range can be enlarged while reducing the influence of the motion amount and improving the range-finding accuracy. Further, the ranging-imaging apparatus 100 of the second embodiment can obtain the same effect as those of the first embodiment.

As to the second embodiment, the lower-frequency phase image is captured after capturing the high-frequency phase image, but is not limited thereto. For example, the high-frequency phase image can be captured after capturing the lower-frequency phase image. Alternatively, the lower-frequency phase image can be captured at a time set between a time of capturing one high-frequency phase image and a time of capturing a next one high-frequency phase image.

As to the second embodiment, one lower-frequency phase image is captured, but is not limited thereto. For example, a plurality of lower-frequency phase images may be captured. In this case, one low-frequency image is generated by averaging a plurality of lower-frequency phase images, and the one low-frequency image is used for correcting the above-described aliasing noise.

As to the above described embodiment, an image capture device, a ranging-imaging apparatus, and an imaging program capable of obtaining a phase image having a wider dynamic range can be provided.

Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

Each of the functions of the above-described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), system on a chip (SOC), graphics processing unit (GPU), and conventional circuit components arranged to perform the recited functions.

The functional units according to the embodiment of this disclosure can be implemented by executable programs described in C, C++, C#, Java (registered trademark), or the like, and the programs according to the embodiment can be stored in hard disk, device-readable storage medium, such as compact disc (CD)-ROM, compact disc re-writable (CD-RW), magneto-optical (MO) disc, digital versatile disc (DVD), flexible disk, erasable programmable read-only memory electrically erasable programmable read-only memory (EEPROM: registered trademark), and erasable programmable read-only memory (EPROM), and can be transmitted through a network in a format that can be used executed at other devices.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier means or medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

**Claims**

1.  An image capture device (4) comprising:

    an image capture control unit (20) configured to control a phase image capture unit (2), the phase image capture unit (2) configured to receive reflection light obtained by irradiating an object with light emitted from a light source at different timings and capture phase images of a plurality of types of different phases, to capture a plurality of phase images of the same phase in one-time image capturing operation; and
    an image addition unit (23) configured to add the plurality of phase images of the same phase captured in the one-time image capturing operation to generate and output an added phase image for each one-time image capturing operation,
    wherein the image capture control unit (20) controls the phase image capture unit (2) to perform the image capturing operation for each of the plurality of types of different phases.

2.  The image capture device (4) according to claim 1, further comprising:

    a motion estimation unit (24) configured to detect a motion amount between the added phase images of different phases based on the added phase images of each of different phases; and
    a phase image correction unit (25) configured to correct the motion amount for the added phase image based on the detected motion amount and to output a motion-amount-corrected added phase image.

3.  The image capture device (4) according to claim 1, further comprising:

    a motion estimation unit (24) configured to detect a motion amount between the added phase images of different phases based on the added phase images of each of different phases, and to calculate a motion amount for each of the plurality of phase images not yet receiving addition processing based on the detected motion amount; and
    a phase image correction unit (25) configured to generate a corrected phase image obtained by performing the motion amount correction processing on the phase image, based on the motion amount for each of the plurality of phase images,
    wherein the image addition unit (23) outputs the corrected added phase image obtained by performing the addition processing on the corrected phase image of the same phase.

4.  A range finding device (100) comprising:

    the image capture device (4) according to claim 1; and
    a range calculation unit (26) configured to calculate a range to the object based on the added phase images of the plurality of different phases output from the image capture device (4).

5.  A range finding device (100) comprising:

    the image capture device (4) according to claim 2 or claim 3; and
    a range calculation unit (26) configured to calculate a range to the object based on the motion-amount-corrected added phase image of the plurality of different phases output from the image capture device (4).

6.  The range finding device (100) according to claim 4 or claim 5,
    wherein the image capture control unit (20) controls the phase image capture unit (2) to generate a phase image based on light received at a first frequency, and a phase image based on light received at a second frequency lower than the first frequency in one-time image capturing operation, and
    wherein the range calculation unit (26) corrects a range to the object using a range calculated based on the phase image received at the second frequency.

7.  A method of controlling a range finding operation comprising:

controlling a phase image capture unit (2), the phase image capture unit (2) configured to receive reflection light obtained by irradiating an object with light emitted from a light source at different timings and capture phase images of a plurality of types of different phases, to capture a plurality of phase images of the same phase in one-time image capturing operation;

adding the plurality of phase images of the same phase captured in the one-time image capturing operation to generate and output an added phase image for each one-time image capturing operation; and

controlling the phase image capture unit (2) to perform the image capturing operation for each of the plurality of types of different phases.

8. A carrier means storing a computer-readable code for causing a computer system to execute the method of claim 7.

# FIG. 1

RANGING-IMAGING APPARATUS — 100

RANGING CONTROL UNIT — 4

IMAGE SENSOR — 2

ADC — 3

SENSOR I/F — 5

CPU — 8

LIGHT SOURCE — 1

LIGHT SOURCE DRIVE CIRCUIT — 6

ROM — 9

INPUT-OUTPUT I/F — 7

RAM — 10

SSD — 11

PROGRAM OF RANGING AND CAPTURING

EP 3 882 656 A1

# FIG. 2

RANGING CONTROL UNIT ⌐4

| ⌐20 IMAGE CAPTURE CONTROL UNIT | ⌐24 MOTION ESTIMATION UNIT |
| ⌐21 STORAGE CONTROL UNIT | ⌐25 PHASE IMAGE CORRECTION UNIT |
| ⌐22 LIGHT SOURCE CONTROL UNIT | ⌐26 RANGE CALCULATION UNIT |
| ⌐23 IMAGE ADDITION UNIT | ⌐27 OUTPUT CONTROL UNIT |

# FIG. 3

PROJECTION LIGHT    (a)

REFLECTION LIGHT    (b)

FIRST TIME

FIRST CHARGE ACCUMULATION UNIT (PHASE OF 0 DEGREE)    (c)

SECOND CHARGE ACCUMULATION UNIT (PHASE OF 180 DEGREE)    (d)

SECOND TIME

FIRST CHARGE ACCUMULATION UNIT (PHASE OF 90 DEGREE)    (e)

SECOND CHARGE ACCUMULATION UNIT (PHASE OF 270 DEGREE)    (f)

TIME

# FIG. 4

COMPARATIVE EXAMPLE

FIRST TIME

t

| 0 DEGREE | 180 DEGREES | 90 DEGREES | 270 DEGREES |
|---|---|---|---|
| 0 | 1 | 2 | 3 |

⋮

$(4N-3)t$

$4Nt$

N-th TIME

| 0 DEGREE | 180 DEGREES | 90 DEGREES | 270 DEGREES |
|---|---|---|---|
| 0 | 1 | 2 | 3 |

# FIG. 5

0 DEGREE

180 DEGREES

90 DEGREES

270 DEGREES

# FIG. 6

PHASE 0                PHASE 1···3

PROJECTION LIGHT  (a)

REPEAT

REFLECTION LIGHT  (b)

A  (c)

B  (d)

t

RO A−B      RO A−B      RO A−B      RO A−B

RO A−B: light exposure signal is read as "A−B"

EP 3 882 656 A1

# FIG. 7

# FIG. 8

MODULATION FREQUENCY F$_H$ (HIGHER FREQUENCY)

MODULATION FREQUENCY F$_L$ (LOWER FREQUENCY)

Europäisches
Patentamt

European
Patent Office

Office européen
des brevets

# EUROPEAN SEARCH REPORT

Application Number

EP 21 15 0327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/188028 A1 (HUI HUA [US] ET AL) 4 August 2011 (2011-08-04) | 1,4,6-8 | INV. G01S7/481 G01S7/4865 G01S7/487 G01S17/894 |
| Y | * paragraph [0044] - paragraph [0076]; figures 2,3,4b * | 2,3,5 | |
| X | US 2016/097841 A1 (OTANI MITSUHIKO [JP] ET AL) 7 April 2016 (2016-04-07) * paragraph [0061] - paragraph [0068]; figures 1,3,4 * * paragraph [0080] - paragraph [0084] * | 1,4,7,8 | ADD. G01S13/931 |
| Y | WO 2015/057098 A1 (LSI CORP [US]; KHOLODENKO ALEXANDER BORISOVICH [RU] ET AL.) 23 April 2015 (2015-04-23) * page 7 - page 17; figures 2-6 * | 2,3,5 | |

TECHNICAL FIELDS
SEARCHED      (IPC)

G01S
F41G

The present search report has been drawn up for all claims

| Place of search | Date of completion of the search | Examiner |
|---|---|---|
| Munich | 14 June 2021 | Kaleve, Abraham |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 0327

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2021

| Patent document cited in search report | | | Publication date | Patent family member(s) | | | Publication date |
|---|---|---|---|---|---|---|---|
| US 2011188028 | A1 | | 04-08-2011 | CN | 102393515 | A | 28-03-2012 |
| | | | | EP | 2596321 | A2 | 29-05-2013 |
| | | | | IL | 224134 | A | 29-09-2016 |
| | | | | JP | 5918763 | B2 | 18-05-2016 |
| | | | | JP | 2013538342 | A | 10-10-2013 |
| | | | | KR | 20150007192 | A | 20-01-2015 |
| | | | | US | 2011188028 | A1 | 04-08-2011 |
| | | | | WO | 2012012607 | A2 | 26-01-2012 |
| US 2016097841 | A1 | | 07-04-2016 | JP | 6435513 | B2 | 12-12-2018 |
| | | | | JP | WO2014207992 | A1 | 23-02-2017 |
| | | | | US | 2016097841 | A1 | 07-04-2016 |
| | | | | WO | 2014207992 | A1 | 31-12-2014 |
| WO 2015057098 | A1 | | 23-04-2015 | US | 2016232684 | A1 | 11-08-2016 |
| | | | | WO | 2015057098 | A1 | 23-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014207992 A1

**Non-patent literature cited in the description**

- **QI GUO.** Iuri FrosioOrazio, GalloTodd Zickler (SEAS, Harvard University). SEAS, Harvard University, 10 September 2018